Europäisches Patentamt

European Patent Office

Office européen des brevets

(11) Veröffentlichungsnummer: **0 473 020 A2**

# EUROPÄISCHE PATENTANMELDUNG

(21) Anmeldenummer: **91113702.4**

(51) Int. Cl.5: **C07F 9/38**

(22) Anmeldetag: **15.08.91**

(30) Priorität: **28.08.90 DE 4027106**

(43) Veröffentlichungstag der Anmeldung:
**04.03.92 Patentblatt 92/10**

(84) Benannte Vertragsstaaten:
**CH DE ES FR GB IT LI NL**

(71) Anmelder: **BAYER AG**

**W-5090 Leverkusen 1 Bayerwerk(DE)**

(72) Erfinder: **Arndt, Uwe, Dr.**
**Malteserstrasse 85**
**W-5000 Köln 40(DE)**
Erfinder: **Block, Hans-Dieter, Dr.**
**Biesenbach 49**
**W-5090 Leverkusen 3(DE)**
Erfinder: **Kleinstück, Roland, Dr.**
**Am Katterbach 5**
**W-5060 Bergisch Gladbach 2(DE)**

(54) Verfahren zur Herstellung von Alkalimetallsalzen der 2-Phosphonobutan-1,2,4-tricarbonsäure.

(57) Die vorliegende Erfindung betrifft ein Verfahren zur Herstellung von Alkalimetallsalzen von 2-Phosphonobutan-1,2,4-tricarbonsäure durch alkalische Verseifung der entsprechenden 2-Phosphono-1,2,4-tricarbonsäurepentaalkylester bzw. Partialester.

EP 0 473 020 A2

Rank Xerox (UK) Business Services

Die vorliegende Erfindung betrifft ein Verfahren zur Herstellung von Alkalimetallsalzen von 2-Phosphonobutan-1,2,4-tricarbonsäure durch alkalische Verseifung der entsprechenden 2-Phosphono-1,2,4-tricarbonsäurepentaalkylester bzw. Partialester.

Es ist bekannt, daß sich zur Sequestrierung von Erdalkaliionen in wäßrigen Systemen Phosphonsäuren und ihre löslichen Salze eignen. Beispielhaft seien folgende Verbindungen genannt: Nitrilotrimethylenphosphonsäure, 1-Hydroxyethan-1,1-diphosphonsäure, 1-Phosphonopropan-1,2,3-tricarbonsäure, Phosphonobernsteinsäure und 2-Phosphonobutan-1,2,4-tricarbonsäure (DE-A-20 61 838, EP-A-59 897).

Die Phosphonsäuren zeigen den sogenannten Threshold Effekt, d.h. die Bildung eines unlöslichen Niederschlags von Calciumcarbonat in kalkhaltigem Wasser wird schon bei Zugabe einer dieser Verbindungen in unterstöchiometrischer Menge bezüglich des Kalkgehaltes verhindert, daher auch die Bezeichnung Threshold-Inhibitoren.

Schon seit längerer Zeit besteht ein wirtschaftliches Interesse an der technischen Darstellung der obengenannten Phosphonsäuren. Da einige dieser Verbindungen, z.B. 1-Phosphonopropan-1,2,3-tricarbonsäure, Phosphonobernsteinsäure oder 2-Phosphonobutan-1,2,4-tricarbonsäure aus ihren Estern durch Verseifung hergestellt werden, besteht weiterhin ein großes Interesse an Verfahren zur Überführung der Ester in die freien Säuren bzw. ihre Alkalimetallsalze. Die Alkalimetallsalze werden gegenüber den freien Säuren immer dann bevorzugt, wenn ein Einsatz der Threshold-Inhibitoren in alkalischen Lösungen vorgesehen ist oder durch Trocknen stabile, lagerfähige Pulver hergestellt werden sollen.

Aus den genannten Gründen wurden in letzter Zeit eine Reihe von Versuchen unternommen, das herkömmliche Verfahren zur Herstellung der Phosphonsäuren, aus denen dann durch Neutralisation mit Alkalimetallhydroxid-Lösung die entsprechenden Alkalimetallsalze gewonnen werden, durch Hydrolyse der entsprechenden Ester, insbesondere der Methylester, in Gegenwart katalytisch wirkender Mineralsäure oder in Gegenwart von Halogenwasserstoff zu verbessern.

Ein wesentlicher Fortschritt wurde mit dem in der DE-A-2 229 087 beschriebenen Verfahren, wonach bei Temperaturen von 90 bis 150 °C ohne Fremdsäure-Zusatz verseift wird und die zu erzeugende Phosphonsäure selbst als Katalysator benutzt wird, erreicht. Durch Neutralisation mit Alkalimetallhydroxid-Lösung werden im Anschluß an die vollständige Verseifung die entsprechenden Alkalimetallsalze gebildet. Nachteilig erweist sich bei diesem Verfahren die erforderliche lange Reaktionszeit für vollständige Hydrolyse, die notwendige Abfuhr der entstehenden Neutralisationswärme sowie im speziellen Fall der technisch besonders wichtigen 2-Phosphonobutan-1,2,4-tricarbonsäure die Bildung von schwerlöslichen Alkalimetallsalzen einer teilneutralisierten 2-Phosphonobutan-1,2,4-tricarbonsäure. Weitere vorteilhafte Fortentwicklungen dieses Verfahrens ohne Zusatz von Fremdsäure sind in DE-A-2 441 783, DE-A-2 441 878 und DE-A-2 745 982 beschrieben.

Aufgabe war es daher, ein sowohl chargenweise wie auch kontinuierlich betreibbares Verfahren zur Verfügung zu stellen, in dem die beschriebenen Nachteile bei der Herstellung löslicher Alkalimetallsalze der 2-Phosphonobutan-1,2,4-tricarbonsäure vermieden werden.

Gegenstand der Erfindung ist ein Verfahren zur Herstellung von Alkalimetallsalzen der 2-Phosphonobutan-1,2,4-tricarbonsäure, welches dadurch gekennzeichnet ist, daß man im Eintopfverfahren 2-Phosphonobutan-1,2,4-tricarbonsäurepentaalkylester bzw. Partialester mit einer wäßrigen Alkalimetallhydroxid-Lösung in einem Verhältnis von 0,5 bis 0,76 Mol, vorzugsweise von 0,6 bis 0,7 Mol Alkalimetallhydroxid pro Mol Esterfunktion bei Temperaturen von 20 bis 200 °C umsetzt.

Unter diesen Bedingungen kann eine gegenüber der herkömmlichen sauer katalysierten Verseifung um den Faktor 5 bis 8 rascher ablaufende vollständige Verseifung erzielt werden.

Überraschenderweise sind niedrigere und auch höhere Verhältnisse für die Durchführung dieses Verfahrens ungeeignet und führen nicht zum Ziel, Bei höherem Einsatz von Alkalimetallhydroxid bleibt entgegen aller Erwartung die Verseifung sogar unvollständig.

Für das erfindungsgemäße Verfahren geeignete Alkylester sind insbesondere die Methyl- und Ethylester sowie darüber hinaus aber auch die Ester höherer Alkohole wie z.B. Propyl-, Butyl- und Pentylester oder gemischte Ester von 2-Phosphonobutan-1,2,4-tricarbonsäure, wie z.B. ein gemischter Methyl-Ethylester.

Von den geeigneten Alkalimetallhydroxiden seien neben Natriumhydroxid noch Kaliumhydroxid und Lithiumhydroxid beispielhaft genannt.

Besonders bevorzugt ist ein Verfahren zur Herstellung von Alkalimetallsalzen der 2-Phosphonobutan-1,2,4-tricarbonsäure, welches dadurch gekennzeichnet ist, daß als Ester der 2-Phosphono-butan-1,2,4-tricarbonsäure der Pentamethylester und als Alkalimetallhydroxid Natriumhydroxid eingesetzt wird.

Bevorzugt werden die Umsetzungen so durchgeführt, daß die Verseifung bei Temperaturen zwischen 60 und 160 °C ausgeführt wird.

Besonders bevorzugt ist die Verfahrensvariante, bei der nach vollständiger Verseifung die zur Überführung in das Tetra- bzw. Pentaalkalimetallsalz von 2-Phosphonobutan-1,2,4-tricarbonsäure notwendige Menge Alkalimetallhydroxid zugefügt wird.

Verfahren, bei denen die Hydrolyse mit Alkalimetallhydroxid-Lösungen im Konzentrationsbreich von 10 bis 45 % durchgeführt wird, sind besonders bevorzugt.

Vorteilhaft verlaufen Umsetzungen, bei denen die Verseifung unter Druck ausgeführt wird.

Bevorzugt wird das Verfahren weiterhin so ausgeführt, daß die Verseifung kontinuierlich durchgeführt wird.

Beispielsweise wird der zu verseifende 2-Phosphonobutan-1,2,4-tricarbonsäurepentaalkylester als wäßrige Lösung vorgelegt und unter Rühren mit einer wäßrigen Alkalimetallhydroxid-Lösung in einem Reaktionsverhältnis von 2,5 bis 3,8 Mol, vorzugsweise 3 bis 3,5 Mol Alkalimetallhydroxid pro Mol Phosphonocarbonsäureester bei Temperaturen von 20 bis 200 °C umgesetzt.

Bevorzugt werden die obengenannten Mengen an 2-Phosphonobutan-1,2,4-tricarbonsäurepentaalkylester und Alkalimetallhydroxidlösung z.B. in einem gerührten Reaktionsgefäß vorgelegt und auf ca. 100 °C aufgeheizt. Anschließend kann für mehrere Stunden bei Temperaturen zwischen 100 und 130 °C Wasserdampf durchgeleitet und ein Wasser-Alkohol-Gemisch abdestilliert werden. Die flüchtigen Bestandteile werden kondensiert und der Alkohol destillativ rückgewonnen. Nach erfolgter vollständiger Verseifung kann bei Bedarf die für eine vollständige Neutralisation aller Säurefunktionen notwendige Menge Alkalimetallhydroxid nachdosiert werden.

Die Erfindung soll anhand der folgenden Beispiele noch näher erläutert werden. Der Verseifungsgrad wurde analytisch bestimmt.

Beispiele

2-Phosphonobutan-1,2,4-tricarbonsäurepentamethylester wird in einem gerührten 4 l-Reaktionsgefäß mit 45 %iger Natronlauge entsprechend der gewählten Stöchiometrie (siehe Tabelle 1) versetzt und auf 110 °C erwärmt. Anschließend wird über einen Zeitraum von mehreren Stunden 1250 g Wasserdampf pro Liter Reaktionsgemisch und Stunde in das Reaktionsgemisch eingeleitet. Das Ergebnis der einzelnen Versuche ist Tabelle 2 zu entnehmen.

Tabelle 1

| Beispiel | Menge Ester (g) | Menge NaOH-Lösung (g) | Mol NaOH zu Mol Ester | Menge $H_2O$ (g) |
|---|---|---|---|---|
| Beispiel 1 | 1700 | 1333 | 3:1 | - |
| Vergleichsbeispiel 1 | 1360 | 1422 | 4:1 | - |
| Vergleichsbeispiel 2 | 1700 | - | | 300 |

## Tabelle 2
## Verseifungsgrad in (%) in Abhängigkeit von der Verseifungsdauer

|  | Verseifungsdauer (h) | | |
|---|---|---|---|
|  | 0,5 | 2 | 8 |
| Beispiel 1 | 77,6 | 94,0 | 97 |
| Vergleichsbeispiel 1 | 78,0 | 79,0 | 81,0 |
| Vergleichsbeispiel 2 | - | 40 | 84 |

Die in Tabelle 2 aufgeführten Analysenergebnisse zeigen, daß in Beispiel 1 eine weitgehende Versei-

3

fung bereits nach 2 Stunden erfolgt ist. Der Vergleich dieses Ergebnisses mit Vergleichsbeispiel 2, bei dem der 2-Phosphonobutan-1,2,4-tricarbonsäurepentamethylester herkömmlich nach dem in der DE-A-2 229 087 beschriebenen Verfahren ohne Fremdsäurezusatz verseift worden ist, zeigt, daß bei der sauren Verseifung auch nach 8 h erst ein Verseifungsgrad von 84 % erreicht wird. Des weiteren wird durch Vergleichsbeispiel 1 gezeigt, daß bei alkalischer Verseifung und Verwendung von Alkalimetallhydroxid in Mengen die außerhalb des beanspruchten Verhältnisses liegen, die Verseifung völlig unerwartet bei einem Verseifungsgrad von 80 % stehen bleibt und eine vollständige Verseifung in einem vergleichbaren Zeitraum nicht erreicht wird.

**Patentansprüche**

1. Verfahren zur Herstellung von Alkalimetallsalzen der 2-Phosphonobutan-1,2,4-tricarbonsäure aus 2-Phosphonobutan-1,2,4-tricarbonsäurepentaalkylester bzw. Partialestern, dadurch gekennzeichnet, daß man im Eintopfverfahren 2-Phosphonobutan-1,2,4-tricarbonsäurepentaalkylester bzw. Partialester mit einer wäßrigen Alkalimetallhydroxid-Lösung in einem Verhältnis von 0,5 bis 0,76 Mol, vorzugsweise 0,6 bis 0,7 Mol Alkalimetallhydroxid pro Mol Esterfunktion bei Temperaturen von 20 bis 200 °C umsetzt.

2. Verfahren nach Anspruch 1, dadurch gekennzeichnet, daß als Ester der 2-Phosphonobutan-1,2,4-tricarbonsäure der Pentamethylester eingesetzt wird.

3. Verfahren nach einem der Ansprüche 1 und 2, dadurch gekennzeichnet, daß als Alkalimetallhydroxid Natriumhydroxid eingesetzt wird.

4. Verfahren nach einem der Ansprüche 1 bis 3, dadurch gekennzeichnet, daß die Verseifung bei Temperaturen zwischen 60 und 160 °C durchgeführt wird.

5. Verfahren nach einem der Ansprüche 1 bis 4, dadurch gekennzeichnet, daß die Alkylester gleich oder unabhängig voneinander Methyl- oder Ethylester sind.

6. Verfahren nach einem der Ansprüche 1 bis 5, dadurch gekennzeicnet, daß nach vollständiger Verseifung die zur Überführung in das Tetra- bzw. Pentaalkalimetallsalz von 2-Phosphonobutan-1,2,4-tricarbonsäure notwendige Menge Alkalimetallhydroxid zugefügt wird.

7. Verfahren nach einem der Ansprüche 1 bis 6, dadurch gekennzeichnet, daß die Hydrolyse mit Alkalimetallhydroxid-Lösungen im Konzentrationsbereich von 10 bis 45 % durchgeführt wird.

8. Verfahren nach einem der Ansprüche 1 bis 7, dadurch gekennzeichnet, daß die Verseifung unter Druck ausgeführt wird.

9. Verfahren nach einem der Ansprüche 1 bis 8, dadurch gekennzeichnet, daß die Verseifung kontinuierlich durchgeführt wird.

10. Verfahren nach einem der Ansprüche 1 bis 9, dadurch gekennzeichnet, daß während der Umsetzung der beiden Reaktanden für mehrere Stunden bei Temperaturen zwischen 100 und 130 °C Wasserdampf durch das Reaktionsgemisch geleitet wird, ein Wasser-Alkoholgemisch abdestilliert wird, die flüchtigen Bestandteile kondensiert werden und der Alkohol destillativ zurückgewonnen wird.